# EUROPEAN PATENT APPLICATION

(11) **EP 2 770 742 A1**
(43) Date of publication of application: **27.08.2014**
(21) Application number: 14155955.9
(22) Date of filing: 20.02.2014
(51) Int. Cl.: H04N 21/235, H04N 21/236, H04N 21/258, H04N 21/442, H04N 21/658, H04N 21/81, H04H 60/33, G06Q 30/02

(54) **Cross platform content exposure tracking**

(30) Priority: 20.02.2013 US 201313771947
(71) Applicant: Comcast Cable Communications, LLC, Philadelphia, PA 19103 (US)
(72) Inventor: Ivins, Robert, Philadelphia, PA Pennsylvania 19103 (US)
(74) Representative: Jansen, Cornelis Marinus

(57) **Abstract**

A system for tracking how often content items are accessed by devices across multiple platforms is described. The content items may comprise advertisements. When a device accesses a content item, the device may detect the presence of a tag included with the content item. Based on the tag, the device may send a message to a computing device indicating that the content item was accessed. The computing device may accumulate the received messages and generate a report indicating the amount of exposure of various content items across various platforms and demographics.

## Description

### BACKGROUND

Traditionally, entities such as content providers and advertisers estimate the number of users watching television shows, movies, and other content by tracking the viewing habits of a sample of homes. For example, content providers received estimates of viewing habits for the entire United States by tracking viewing habits of 20,000 homes. These samples may also be used to estimate the number of homes exposed to advertisements and advertisement campaigns. Content and/or advertisement providers may assume that homes that have viewed a certain television program have also viewed all advertisements, such as television commercials, scheduled to play during the television program (e.g., interspersed throughout the television program). Furthermore, these providers track users' viewing habits across a single platform. For example, providers may track users' viewing habits of linear content (such as television programs scheduled to air based on a schedule), but not non-linear content (such as recorded programs and online content).

This method of estimating advertisement exposure may be inaccurate for several reasons. For example, viewers that begin watching a television program might not view all of the commercials. A viewer could switch channels in the middle of a television program and might not be exposed to advertisements scheduled to play later in the program. Also, known methods rely on samples of users to estimate the number of times advertisements have been viewed. Another shortcoming is that users' viewing habits are tracked across a single platform. What is needed is a more accurate way of tracking users' actual exposure to content across multiple platform types.

### SUMMARY

This summary is not intended to identify critical or essential features of the disclosures herein, but instead merely summarizes certain features and variations thereof. Other details and features will also be described in the sections that follow. Some of the various features described herein relate to a system and method for tracking content exposure across different platforms. In some embodiments, a method described herein (or a system or apparatus configured to perform the method) may comprise generating, by a computing device, first data comprising a first content item (such as an advertisement) and a first content access tag. The first content access tag may be configured to be read by devices of a first type. In some aspects, the first content item may comprise a video advertisement, and the first content access tag may comprise an enhanced television code. Furthermore, the enhanced television code may comprise an enhanced television binary interchange format (EBIF).

The method may also comprise generating second data comprising a second content item and a second content access tag. The second content access tag may be configured to be read by devices of a second type different from the first type. In some aspects, the second content item may comprise the video advertisement and the second content access tag may comprise network specific (e.g., Internet) code. Furthermore, the network code may comprise a Hypertext Transfer Protocol (HTTP) cookie.

A message including an identifier that identifies a first device and indicates that the first device accessed the first content item may be received from the first device, which may be of the first type. The first device may comprise a set-top box or an associated display device, and the identifier of the first device may comprise a MAC identifier. A message including an identifier that identifies a second device and indicates that the second device accessed the second content item may be received from the second device, which may be of the second type. The second device may be configured to run a web browser application, and the identifier of the second device may comprise an IP address. Based on the received messages, a report indicating that the first content item and the second content item were accessed may be generated.

Based on the identifier of the first device and the identifier of the second device, it may be determined that the first device and the second device are associated with the same household, and the report may indicate that at least one demographic category was exposed to both the first content item and the second content item. Alternatively, the method may comprise determining, based on the identifier of the first device, that the first device is associated with a first household, and determining, based on the identifier of the second device, that the second device is associated with a second household different from the first household. The second household may be in a different demographic category from the first household, and the report may indicate that a first demographic category was exposed to the first content item and that a second demographic category was exposed to the second content item, the first demographic category being different from the second demographic category.

In some aspects, the method may comprise determining a first demographic category for the first device and a second demographic category for the second device. Then, the report may indicate that the first content item was accessed by a user in the first demographic category and that the second content item was accessed by a user in the second demographic category.

In some embodiments, a method described herein may comprise receiving an advertisement and generating, by a computing device, a first tagged advertisement by adding a first content access tag to the advertisement. The first tagged advertisement may comprise a video advertisement. The first content access tag may be formatted according to a first platform type. The first platform type may comprise an enhanced television code. Furthermore, the enhanced television code may comprise an enhanced television binary interchange format (EBIF).

The method may also comprise generating a second tagged advertisement by adding a second content access tag to the advertisement. The second tagged advertisement may comprise at least one of an online video advertisement and a web banner advertisement. The second content access tag may be formatted according to a second platform type different from the first platform type. The second platform type may comprise a hypertext transfer protocol (HTTP) code. Furthermore, the HTTP code may comprise an HTTP cookie.

In another aspect, a method may further comprise receiving, from a first device configured to detect content access tags formatted according to the first platform type, an indication that the first device accessed the advertisement. The indication may be sent by the first device when the first device detects the first content access tag. The received indication may include an identifier, such as a MAC identifier, of the first device (which may additionally indicate the type of device), an identifier of the advertisement, and/or a timestamp identifying the time that the first device accessed the advertisement. Based on the indication received from the first device, a first demographic category associated with the first device may be determined.

The method may comprise receiving, from a second device configured to detect content access tags formatted according to the second platform type, a second indication that the second device accessed the advertisement. The second indication may be sent by the second device when the second device detects the second content access tag. The second received indication may include an IP address of the second device, an identifier of the advertisement, and/or a timestamp identifying the time that the second device accessed the advertisement. Based on the indication received from the second device, a second demographic category associated with the second device may be determined. The second demographic category may be different from the first demographic category. A report indicating that the advertisement was accessed by both a household in the first demographic category and a household in the second demographic category may be generated.

In some aspects, a method may comprise determining a demographic category associated with the first device and the second device based on the indication received from the first device and the indication received from the second device. A report indicating that the advertisement was accessed at least twice by households in the demographic category may be generated.

The method may further comprise receiving a request for video content from one of the first device and the second device. A first segment of the requested video content may be transmitted to the requesting device. After transmitting the first segment, one of the first tagged advertisement and the second tagged advertisement may be transmitted to the requesting device. After transmitting one of the first and second tagged advertisements, a second segment of the requested video content may be transmitted to the requesting device.

In some embodiments, one or more computer-readable storage media storing computer-readable instructions that, when executed by a computing device, may cause the computing device to receive a data stream comprising a segment of a video content item, an advertisement content item different from the video content item, and/or a tag for the advertisement content item. The segment of the video content item may be displayed on a display device. After displaying the segment of the video content item, the advertisement content item may be displayed. In response to displaying the advertisement content item and based on the presence of the tag, a message comprising a device identifier and an identifier for the advertisement content item may be transmitted to a second computing device for processing.

The computing device may receive a second data stream comprising a segment of a second video content item and a second advertisement content item different from the second video content item. The segment of the second video content item may be displayed on the display device. After displaying the segment of the second video content item, the second advertisement content item may be displayed on the display device. In response to determining that a tag is not present in the second data stream, a second message indicating that the second advertisement content item has been accessed might not be transmitted.

### BRIEF DESCRIPTION OF THE DRAWINGS

Some features herein are illustrated by way of example, and not by way of limitation, in the figures of the accompanying drawings and in which like reference numerals refer to similar elements.
Figure 1 illustrates an example information access and distribution network.
Figure 2 illustrates an example computing device on which various elements described herein can be implemented.
Figure 3 illustrates an example method of generating tags for content items based on the platform type of each content item.
Figure 4 illustrates an example method of detecting a content item tag and sending a message in response to the detection.
Figure 5 illustrates an example method of determining that one or more content item(s) have been accessed by device(s) and generating a report.
Figure 6 illustrates an example of adding a tag to a content item.
Figure 7 illustrates example content items formatted for different platform types.
Figure 8 illustrates an example report summarizing users' content access.
Figure 9 illustrates another example report summarizing users' content access.
Figure 10A illustrates an additional example report summarizing users' content access.
Figure 10B illustrates yet an additional example report summarizing users' content access.

### DETAILED DESCRIPTION

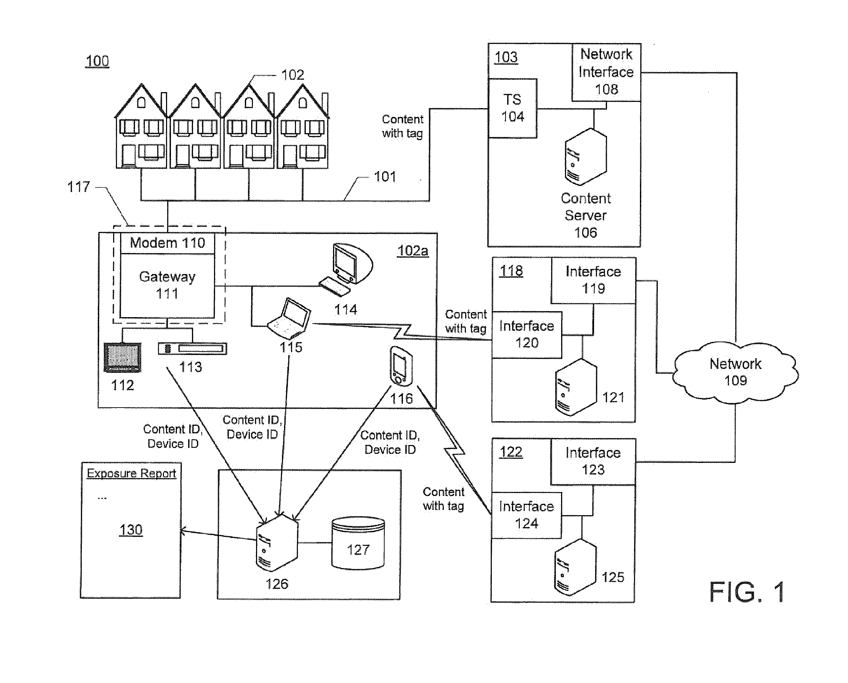

Figure 1 illustrates an example information access and distribution network 100 on which many of the various features described herein may be implemented. Network 100 may be any type of information distribution network, such as satellite, telephone, cellular, wireless, etc. One example may be an optical fiber network, a coaxial cable network or a hybrid fiber/coax (HFC) distribution network. Such networks 100 use a series of interconnected communication links 101 (e.g., coaxial cables, optical fibers, wireless connections, etc.) to connect multiple premises, such as homes 102, to a local office (e.g., a central office or headend 103). A local office 103 may transmit downstream information signals onto the links 101, and each home 102 may have devices used to receive and process those signals.

There may be one link 101 originating from the local office 103, and it may be split a number of times to distribute the signal to various homes 102 in the vicinity (which may be many miles) of the local office 103. Although the term home is used by way of example, locations 102 may be any type of user premises, such as businesses, institutions, etc. The links 101 may include components not illustrated, such as splitters, filters, amplifiers, etc. to help convey the signal clearly. Portions of the links 101 may also be implemented with fiber-optic cable, while other portions may be implemented with coaxial cable, other links, or wireless communication paths.

The local office 103 may include an interface 104, which may be a termination system (TS), such as a cable modem termination system (CMTS), which may be a computing device configured to manage communications between devices on the network of links 101 and backend devices such as server 106 (to be discussed further below). The interface may be as specified in a standard, such as, in an example of an HFC-type network, the Data Over Cable Service Interface Specification (DOCSIS) standard, published by Cable Television Laboratories, Inc. (a.k.a. CableLabs), or it may be a similar or modified device instead. The interface may be configured to place data on one or more downstream channels or frequencies to be received by devices, such as modems at the various homes 102, and to receive upstream communications from those modems on one or more upstream frequencies. The local office 103 may also include one or more network interfaces 108, which can permit the local office 103 to communicate with various other external networks 109. These networks 109 may include, for example, networks of Internet devices, telephone networks, cellular telephone networks, fiber optic networks, local wireless networks (e.g., WiMAX), satellite networks, and any other network, and the interface 108 may include the corresponding circuitry needed to communicate on the network 109, and to other devices on the network such as a cellular telephone network and its corresponding cell phones.

As noted above, the local office 103 may include a variety of servers that may be configured to perform various functions. For example, the local office 103 may include a content server 106. The content server 106 may comprise one or more computing devices that are configured to provide data (e.g., content) to users in the homes. This data may be, for example, advertisements (such as commercials), video on demand movies, television programs, songs, text listings, etc. The content server 106 may include software to validate user identities and entitlements, locate and retrieve requested data, encrypt the data, and initiate delivery (e.g., streaming) of the data to the requesting user and/or device. The content server 106 may also be configured to add tags to content, such as advertisement content, in order to track users' exposure to the content. Adding tags to content will be described in further detail in the examples below.

An example home 102a may include an interface 117. The interface may comprise a device 110, such as a modem, which may include transmitters and receivers used to communicate on the links 101 and with the local office 103. The device 110 may comprise, for example, a coaxial cable modem (for coaxial cable links 101), a fiber interface node (for fiber optic links 101), or any other modem device. The device 110 may be connected to, or be a part of, a gateway interface device 111. The gateway interface device 111 may be a computing device that communicates with the device 110 to allow one or more other devices in the home to communicate with the local office 103 and other devices beyond the local office. The gateway 111 may comprise a set-top box (STB), digital video recorder (DVR), computer server, or any other computing device or terminal. The gateway 111 may also include (not shown) local network interfaces (e.g., routers) to provide communication signals to devices in the home, such as televisions 112, additional terminals 113, such as an STB, personal computers 114, laptop computers 115, wireless devices 116 (wireless laptops and netbooks, mobile phones, mobile televisions, personal digital assistants (PDA), etc.), and any other devices. Examples of the local network interfaces include Multimedia Over Coax Alliance (MoCA) interfaces, Ethernet interfaces, universal serial bus (USB) interfaces, wireless interfaces (e.g., IEEE 802.11), Bluetooth interfaces, and others.

The local office 103 and/or devices in the home 102a may communicate with a network server 118 (e.g., an internet or web server, ad server, etc.) via one or more interfaces 119 and 120. The interfaces 119 and 120 may include transmitters and receivers used to communicate via wire or wirelessly with local office 103 and/or devices in the home using any of the networks previously described (e.g., cellular network, optical fiber network, copper wire network, etc.). The network server 118 may have a variety of servers and/or processors, such as computing device 121, that may be configured to perform various functions. As will be described in further detail in the examples below, computing device 121 may be configured to add tags to advertisement content and/or deliver the content to users. The tags may be utilized to track users' exposure to the content. Network server 118, as illustrated, may be one or more component within a cloud computing environment. Additionally or alternatively, network server 118 may be located at local office 103. For example, network server 118 may comprise one or more servers in addition to server 106 and/or be integrated within server 106.

Content may be tagged and/or provided from any number of sources. For example, cell phone content may be provided to users by cell phone content server 122 having one or more computing device 125. The cell phone server 122 may communicate with the local office 103 and network server 118 via interface 123 and/or network 109. The cell phone server 122 may also communicate with devices at the home 102a via interface 124. For example, the cell phone server 122 may deliver tagged cell phone advertisement content to mobile device 116. Like the network server 118, the cell phone server 122 may be one or more component within a cloud computing environment and/or be located at local office 103.

In some aspects, the local office 103, the network server 118, and the cell phone server 122 may deliver content, such as advertisement content, across two or more different platforms. For example, the cell phone server may deliver advertisement content using a cell phone-based format, such as the Short Message Service (SMS). The network server 118 may deliver advertisement content using the Hypertext Transfer Protocol (HTTP) format. In some embodiments, the cell phone-based format may also use HTTP. The local office 103 may deliver advertisement content using an enhanced television format, as will be described in further detail below.

The network server 118 and/or cell phone server 122 may deliver content directly to the user home 102a, without sending the content through local office 103 or communication link 101. For example, the network server 118 (or cell phone server 122) and the user devices may communicate using a cellular network. On the other hand, the local office 103 and the user devices may communicate using a network different from the cellular network, such as a coaxial, fiber, or hybrid fiber/coaxial network. In this example, the network server 118 and/or cell phone server 122 may generate a tag for a content item, add the tag to the content item, and deliver the content item and tag to any of the devices at the user's home 102a. Local office 103 may similarly generate a tag for a content item, add the tag to the content item, and deliver the content item and tag through the communication link 101 to the user home 102a. Thus, content may be delivered to users directly from the local office 103, the network server 118, and/or the cell phone server 122.

In some aspects, the network server 118 or cell phone server 122 may deliver content to the user home 102a by sending the content through local office 103 and/or through communication link 101. In this example, the network server 118 (or cell phone server 122) may generate the content tag, add the tag to the content item, and forward the content item and tag to the local office 103 and/or through communication link 101. Subsequently, the local office 103 and/or communication link 101 may forward the content and content tag to the home 102a. The local office 103 may also generate tags for content items provided directly from the local office 103, add the tags to the content items, and forward the content items to the home 102a through communication link 101. Accordingly, the devices at the home 102a may receive content from the local office 103, the network server 118, and the cell phone server 122 via the communication link 101. While content may be delivered over the same communication link 101, content originating from local office 103 may be formatted according to a different platform from content originating from network server 118 and cell phone server 122, as was previously described.

In some aspects, the local office 103 may generate tags for content originating from the local office 103, content originating from the network server 118, content originating from the cell phone server 122, and/or content originating from other sources. For example, network server 118 may send content items (e.g., web page content, streaming video, etc.) without tags to the local office 103 via network 109. The local office 103 may generate and add tags for the content items and send the content items and tags to the home 102a. In the example, the local office 103 may generate tags formatted for an Internet platform (e.g., HTTP). The local office 103 may also generate tags formatted for a television platform (e.g., cable television (such as EBIF), satellite television, and the like).

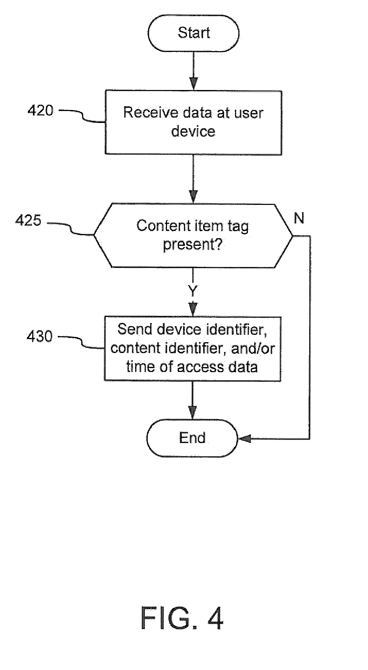

When devices at the home 102a (or otherwise associated with users) receive content items and corresponding tags, the devices may detect that tags are included with the content. In response to detecting a tag, a device may transmit, to a content exposure tracking processor 126, a message indicating that the device has displayed or otherwise rendered the received content. The device may transmit its identifier (e.g., a MAC address, IP address, cell phone identifier, etc.) and an identifier for the accessed content with the message. Transmitting messages in response to detecting content tags will be described in further detail below and in Figure 4.

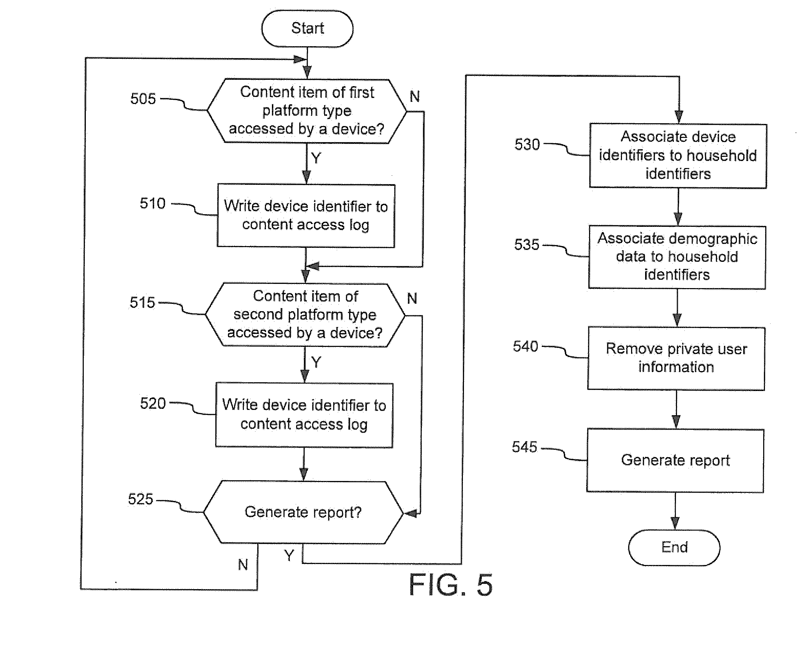

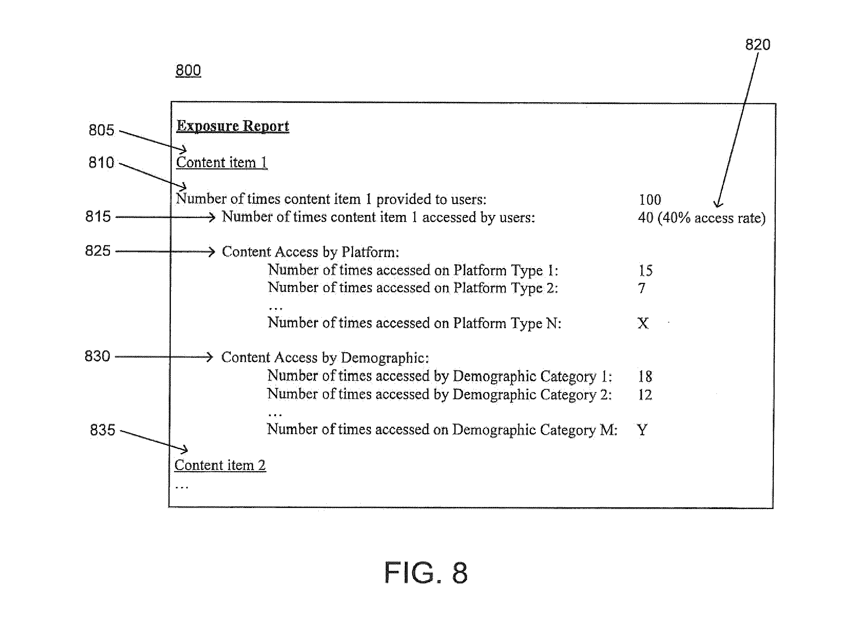

The content exposure tracking processor 126 may receive messages from user devices associated with many users and/or homes. The processor 126 may be separate from the local office 103, network server 118, and cell phone server 122. Alternatively, the processor 126 may be integrated wholly or partially within any of the local office 103, network server 118, and/or cell phone server 122. For example, the processor 126 may be part of content server 106, computing device 121, and/or computing device 125. The processor 126 may collect information on content (e.g., advertisement) exposure across many different platforms and many different homes. The processor 126 may associate demographic data 127 with the content exposure information. The content exposure information and demographic data may be used to generate one or more exposure reports 130 that summarize the amount of exposure of content items. These reports may be sorted by platform type, demographics, and/or individual households. Generating exposure reports will be described in further detail below in Figures 5 and 8.

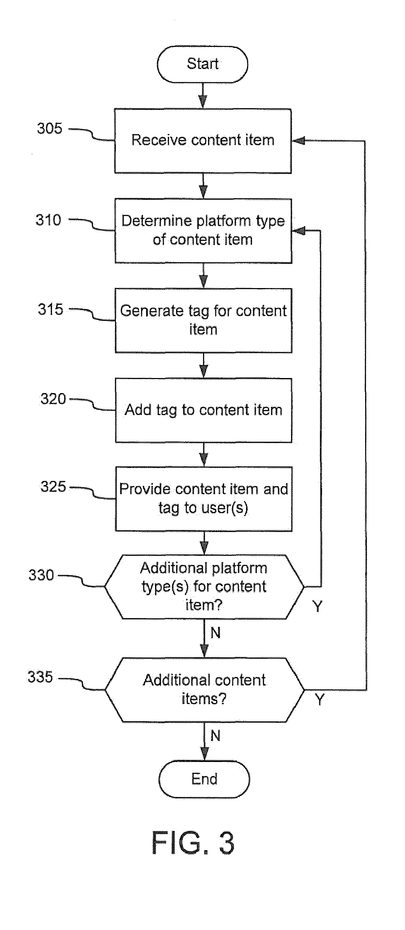

Figure 3 illustrates an example method of generating content access tags for content items based on the platform type of each content item. The steps illustrated in Figure 3 may be performed by one or more computing devices at the local office 103, such as content server 106. Alternatively, some steps may be performed by one or more computing devices at the local office 103, and some steps may be performed by one or more computing devices at the network server 118. The network server 118 may be wholly or partially incorporated in the local office 103, and the steps illustrated in Figure 3 may be performed substantially at the local office 103. For brevity, the following description will generally assume that the steps illustrated in Figure 3 are performed by a computing device, which may include one or more computing devices at local office 103, network server 118, or any other location.

In step 305, a computing device may receive a content item. The content item may comprise advertisement content, such as a video and/or audiovisual advertisement (e.g., television commercials, movie previews, product or service commercials, etc.), an audio advertisement, a still image advertisement (e.g., a web banner advertisement), an interactive advertisement (e.g., an interactive television (ITV) enabled banner advertisement), and/or a combination thereof. For example, advertisement content may include linear television commercials (e.g., broadcast commercials scheduled to play at a particular time and on a particular channel), on-demand commercials (e.g., commercials delivered with video on demand (VOD), video from a digital video recorder (DVR), or other advertisements dynamically inserted in VOD or DVR programs), or content displayed using a web browser application or an Internet television player application (e.g., advertisements delivered using an Internet Protocol television (IPTV)). User devices may run the web browser and/or Internet player. Advertisement content displayed in web browsers and/or Internet players may include still image advertisements (e.g., a picture, such as a banner advertisement or other mobile advertisement), online video advertisements, audio advertisements, and/or combinations thereof. Each content item may be available on multiple platforms. For example, advertisement number 123 from company XYZ may be available as a linear television advertisement, an advertisement inserted into a video on demand program, and a web banner advertisement.

As previously described, a single location (such as local office 103) may process content items and tags for all of the available types of platforms. Alternatively, different locations may process content items and tags having different types of platforms. For example, the content server 106 (e.g., at the local office 103, at the edge of a network, etc.) may handle content items configured to be displayed by a display device of a terminal such as an STB 113. These content items may include, for example, a video commercial for a linear television show, a video commercial for an on demand movie, and other types of content presentable by the terminal. The network server 118, on the other hand, may handle content items configured to be displayed on a web browser application and/or Internet media application running on a device. These content items may include, for example, web banners, online video clips, and other types of content displayable using a web browser or other Internet media application.

In step 310, the computing device may determine the platform type of the content item. The platform type may depend on the type of device displaying the content item. For example, content items (such as a television commercial) configured for display by a display device of the terminal 113 may be of a first platform type. Content items configured for display in a web browser (e.g., online video or banner ad) may be of a second platform type. Accordingly, each device adapted to display content items using a web browser may be considered to utilize the second platform type. These devices may include personal computers, laptop computers, tablet computers, smartphones, and the like.

In step 315, the computing device (or another device) may generate a tag for the content item based on the platform type of the content item. In other words, the tag may be formatted according to the platform type. The tag may comprise an asset identifier to identify the content item, the source of the content item, and the platform of the content item. For example, if the content item is an advertisement number 123 from company XYZ on a linear television platform, the tag may identify the content item as AD_123_XYZ_lineartelevision. A tag for the same advertisement on a web-based platform may be AD_123_XYZ_internet. In some embodiments, the source identifier may identify the network entity that delivers the content item to subscribers. A user device that receives the content item and tag may use the tag to transmit a message indicating that the content item has been accessed at the user device (or the user has otherwise been exposed to the content item). Use of the tag to initiate transmissions by user devices will be described in further detail in Figure 4.

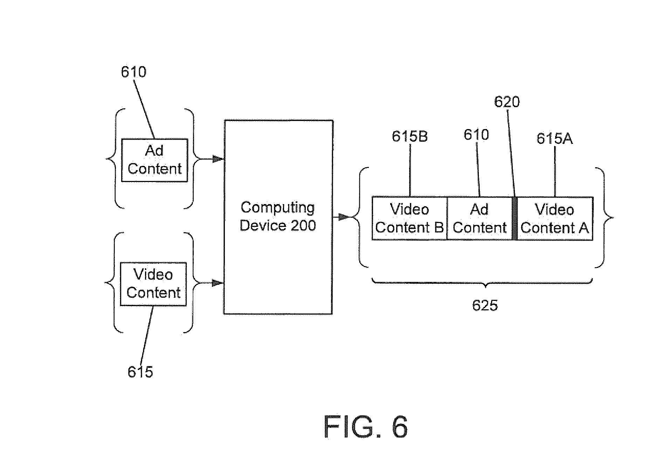

In step 320, the computing device may add the generated tag to the content item. Adding the tag to the content item may include embedding the tag, inserting the tag, and/or appending the tag to the content item. For example, the computing device may add a tag of a first type to a content item of a first platform type. Turning briefly to Figure 6, a scheme is disclosed for adding a tag to a content item, such as an advertisement. The computing device 200 may receive an advertisement 610 and video content 615. The computing device 200 may insert the advertisement 610 at a certain point in the video content (e.g., at minute 10 in the video content, which may be a television show). The computing device may also generate a tag for the advertisement 610 based on the platform type of the advertisement (in step 315). For example, the platform type of the advertisement 610 may be an enhanced television commercial configured to be displayed by a display device of the STB 113. The computing device may generate a tagged advertisement by adding the tag 620 to the advertisement 610. The computing device may generate any number of tags for advertisements and/or the video content. For example, the advertisement 610 and the video content 615 may have separate tags, such that the computing device may separately track a user accessing the video content 615 and the user accessing the advertisement 610. Additional tags may be generated for other advertisements to be included with the video content 615 (and data stream 625).

In some aspects, the tag 620 may be used to indicate that a particular advertisement has been accessed by a user device or otherwise exposed to a user. As illustrated, a data stream 625 may be provided to a user device, such as an STB 113. Video content 615 may be divided into two segments, a first segment 615A and a second segment 615B. For example, if the video content is a 20 minute television show, segment 615A may comprise the first ten minutes of the television show, and segment 615B may comprise the last ten minutes of the show. Advertisement content 610 may be inserted between the first segment 615A and second segment 615B. The advertisement content 610 may comprise, for example, a television commercial. The tag 620 may precede or follow the advertisement content 610 or may be embedded in it. In other words, when the data stream 625 is transmitted to a user device, the user device may read and/or process the tag 620 immediately prior to or after displaying the television commercial 610 on the user device. While Figure 6 illustrates a single pair of advertisement and tag, any number of pairs may be included in the data stream 625. For example, an advertisement and tag pair may follow the second segment 615B. As will be described in further detail in Figure 4, a user device, upon reading the tag, may transmit a message indicating that the advertisement content 610 has been received and has been displayed or otherwise rendered by the user device. Accordingly, the computing device may track the number of times each advertisement is accessed and generate a report summarizing exposure of advertisement, as will be described in further detail in Figures 5 and 8 below.

The platform for the advertisement content 610 may comprise an enhanced television (ETV) system, and an STB 113 may be configured to render for display content in the ETV platform. As previously described, the computing device may generate a tag 620 that is compatible with the ETV platform. For example, the tag 620 may be included in an Enhanced TV Binary Interchange Format (EBIF) file, which may comprise software code. Any of the existing data fields in the EBIF file may store the tag, including header fields, metadata fields, etc. Alternatively, a custom data field and/or data table may be created to store the tag. The EBIF file may be added to the advertisement content 610 (e.g., as a header message). When the user device (e.g., STB 113) detects the EBIF code, the user device may determine that the advertisement content 610 follows and may transmit a message to the computing device indicating successful exposure to the advertisement content 610. In some aspects, a different device, such as personal computer 114, might not be configured to read EBIF or other ETV files. Therefore, the tag 620 may be adapted to the device type of terminal 113, but not personal computer 114.

Returning to Figure 3, in step 325, the tag 620 and advertisement content 610 may be transmitted to user(s) by transmitting the data stream 625 in Figure 6. The data stream 625 may be transmitted to the users in the order illustrated (e.g., image frames making up video content segment 615A first, tag 620 second, advertisement content 610 third, and video content segment 615B fourth). This stream may be transmitted to many users. For example, if the data stream 625 is a linear content stream with a fixed delivery time, the computing device may provide the data stream 625 to each home to receive the video content 615 at the specified delivery time.

In step 330, the computing device may determine whether additional platform types for the content item exist. For example, the advertisement content 610 may comprise a video data stream provided with a linear video content stream 615 (e.g., a broadcast stream). Alternatively or additionally, the advertisement content 610 may comprise a video data stream provided with an on demand video content stream (e.g., a VOD video, video from a local DVR, etc.). The on demand advertisement may utilize a different platform type from the linear advertisement. For example, the on demand advertisement may use a time-shifted ETV platform. In some aspects, time-shifted ETV platform tags may include the same information as ETV platform tags, but additionally include an indication that the on demand video content and/or the on demand advertisement has been shifted in time relative to the original linear (e.g., broadcast) video content. The time-shifted ETV platform tags may be included in an EBIF file with the video content or advertisement. If an additional platform type exists for the content item (step 330: Y), the computing device may repeat one or more of steps 310, 315, 320, and 325 for the content item of the different platform type. These steps may be repeated multiple times until a tag for each available platform type has been generated and added to the corresponding advertisement content.

Another platform type may be a web-based delivery platform (e.g., content delivered via a web browser, Internet player, etc.). Web-based advertisement content may utilize the web-based platform, such as a hypertext transfer protocol (HTTP) for delivery. The tag delivered with the web-based advertisement content may comprise an HTTP cookie. The web-based tag may include the same (or similar) type of information as tags for linear or on-demand content delivery systems, such as an identification of the advertisement (e.g., advertisement 123), the source of the advertisement (e.g., company XYZ), and the platform type (e.g., Internet). When a user requests a website (e.g., a URL), a server (e.g., an ad server) may deliver content associated with the web site to the user device. For example, the server may deliver advertisement content and one or more HTTP cookies associated with the advertisement content to the user. The HTTP cookie may be added to or embedded in the advertisement. When the user device accessing the website detects the HTTP cookie, the user device (through its web browser) may determine that the advertisement content has been viewed by the user. The user device may transmit, to the computing device, a message indicating that the user has been exposed to the advertisement content. When an advertisement 123 has been accessed by both a device using a web-based platform (e.g., as an online video) and a device using an enhanced television platform (e.g., as a linear video), the computing device may receive two messages, each indicating that advertisement 123 has been accessed and/or otherwise exposed to the same user or two different users.

In step 335, the computing device may determine whether to generate content access tags for additional content items. If so, the computing device may repeat one or more of steps 305, 310, 315, 320, 325, and/or 330 for the additional content item.

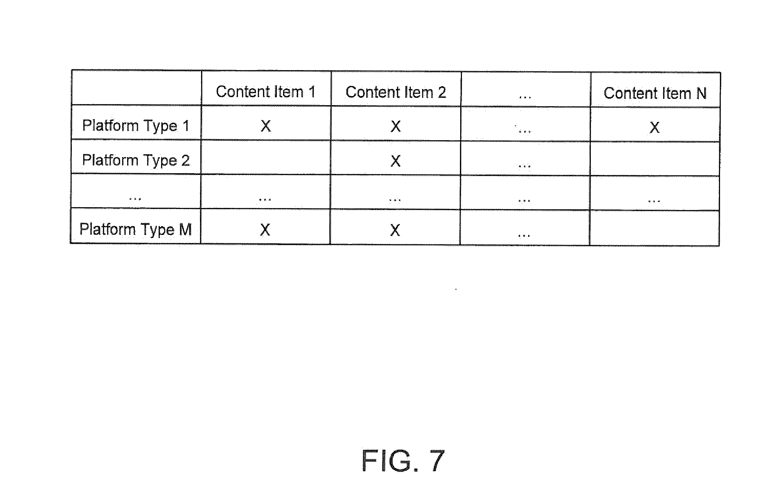

Figure 7 illustrates example content items formatted for different platform types. For example, content item 1 may be available in platform type 1 and platform type M. The computing device may generate tags compatible with platform types 1 and M for the content item 1 using the steps illustrated in Figure 3. Content item 2 may be available in platform type 1, platform type 2, and platform Type M. The computing device may generate tags compatible with platform types 1, 2, and M for the content item 2. Content item N may be available in platform type 1. The computing device may generate a tag compatible with platform type 1 for the content item N. Any combination of content items and platform types may be available.

Figure 4 illustrates an example method of detecting a content item tag and sending a message in response to the detection. The steps illustrated in Figure 4 may be performed by one or more devices, such as the devices at a user's home 102a (e.g., gateway 111, television 112, STB 113, personal computer 114, laptop computer 115, wireless device 116, etc.) or otherwise associated with the user. As will be described below, each time a device detects a tag for an advertisement, the device may transmit a message to the computing device indicating that an associated user has been exposed to the advertisement. Each device may operate on one or more platform types. For example, the wireless device 116 may receive content via a web-based platform. The STB 113 may receive content via an enhanced television-based platform. The personal computer 114 may receive content via both the web-based platform and the television-based platform (e.g., if the computer 114 is configured to run a web browser application and has a television tuner or built-in STB). The examples of device compatibility are merely exemplary, and any combination of platform types may be available for each device.

In step 420, the user device may receive a data stream, such as data stream 625. The data stream may comprise various content items, such as video content 615 (or segments thereof), advertisement content 610, and/or advertisement content tag 620. The data stream may be provided in the order illustrated in Figure 6, e.g., video content segment 615A, advertisement tag 620, advertisement content 610, and video content segment 615B. As the user device receives portions of the data stream 625 (e.g., image frames in each segment), the user device may display the content on a display device and/or store the content at a buffer location.

In step 425, the user device may determine whether a content item tag has been received. In some aspects, the device may detect the tag before, after, or as the content item is displayed or otherwise rendered on a device. For example, if frames from the video content segment 615A are being displayed, the user device might not detect the content item tag 620. Once frames from the advertisement 610 have been received and are displayed on the display device, the device may detect the content item tag 620 (step 425: Y). When the device detects the tag, the user device may determine that a user has been exposed to the advertisement.

In step 430, the device may generate a message to send to the computing device (e.g., server 106, network server 118, etc.). The message may indicate that the advertisement has been accessed, and the message may include an identifier for the user device (e.g., a Media Access Control (MAC) identifier, an IP address, etc.), an identifier for the advertisement (which may be the same identifier included in the tag, such as AD_123_XYZ), and a timestamp that indicates the time that the advertisement was accessed by the device. In some aspects, the identifier of a device configured for a television-based platform (such as the STB 113) may be a MAC identifier. As previously described, these devices may be configured to read EBIF files. The identifier of a device configured for a web-based platform (such as the personal computer 114) may be an IP address. For example, the message may be transmitted when the advertisement (e.g., a video, web banner, etc.) is provided to the user (e.g., from an ad server or other server). Instead of or in addition to transmitting the IP address with the message, the user device may detect advertisement exposure while a user is signed onto an account associated with a service provider (e.g., a provider of the video content 615, advertisement 610, and/or tag 620). When the user signs onto the subscription account with credentials, the user's identity (e.g., username, account number, etc.) may be known to the computing device. Accordingly, the user's identity may be included with the message instead of the IP address if the IP address has changed, such as when the user accesses content from a different network from the network associated with home 102a.

Accordingly, the number of advertisements accessed across various platforms may be accurately tracked. Devices may accumulate messages indicating advertisement content access and transmit the messages as a batch, such as in the middle of the night when less data congestion is present.

Figure 5 illustrates an exemplary method of collecting data indicating content access and generating a report based on the collected data. The steps illustrated in Figure 5 may be performed by computing devices at local office 103, computing devices at web server 118, computing devices at cell phone server 122, and/or combinations thereof. The computing device(s) may receive messages from a plurality of devices and/or homes 102a indicating that a device has accessed a particular content item, such as an advertisement and may use the received information to generate one or more reports summarizing the amount of exposure of each advertisement. In steps 505, 510, 515, and 520, the computing device may determine whether devices have accessed advertisements across different platforms. The determination may be based on messages received by the computing device from user devices and/or from homes 102. While Figure 5 illustrates an example of receiving two such messages, the computing device may receive many more (e.g., thousands or millions of messages) before generating one or more reports that summarize advertisement exposure.

In step 505, the computing device may determine whether an advertisement of a first platform type (e.g., an ETV platform) has been accessed by a device. If a received message indicates yes (step 505: Y), the computing device may write the information included in the message (e.g., MAC identifier of the accessing device, identifier of the advertisement, and timestamp) to a content access log in step 510.

In step 515, the computing device may determine whether an advertisement of a second platform type (e.g., a web-based platform, such as HTTP) has been accessed by a device. If a received message indicates yes (step 515: Y), the computing device may write the information included in the message (e.g., IP address of the accessing device, identifier of the advertisement, and timestamp) to a content access log in step 520. The advertisements of the first platform type and the second platform type may be the same advertisement (e.g., an advertisement available in two platform types) or different advertisements (e.g., an advertisement available in a first platform type and another advertisement available in a second platform type). The device that accessed the advertisement of the first platform type may be the same or a different device from the device that accessed the advertisement of the second platform type. The computing device may continue to receive messages indicating that users have been exposed to advertisements until a report is ready to be generated.

In step 525, the computing device may determine whether to generate the report (e.g., a content access report). This determination may be based on a predefined time period. For example, the computing device may collect access data for a period of one month and generate the content access report at the end of the month. The determination may also be based on a command. For example, a provider of one or more advertisements (e.g., XYZ company) or other service provider may request that a content access report be generated on demand or according to a specified schedule.

In step 530, the computing device may associate device identifiers (e.g., MAC identifiers, IP addresses, and the like) to one or more household or user identifiers. Each home 102 may have a unique household identifier. By associating devices with households, the computing device may track advertisement access by each household rather than by individual devices within or associated with the household. In some aspects, each device may be assigned to a household. For example, a service provider may collect MAC identifiers from various devices at a home 102a when each device registers with a network operated, owned, or managed by the service provider. The service provider may similarly collect IP addresses from devices at the home 102a (either at the time of registration or at any other time). Alternatively (or additionally), each home may be assigned a particular set of IP addresses, such as a range of IP addresses (e.g., 123.123.123.001 to 123.123.123.255), a list of specific IP addresses (e.g., 123.123.123.001, 144.123.123.155, and 123.123.123.123), or a combination thereof. The computing device may associate a message received from a device to the home 102a if the IP address falls within the set of IP addresses assigned to the home 102a. The set of MAC identifiers and IP addresses associated with each home may be determined and/or updated at any time. Similarly, if a user logs into his or her service account from an out-ofhousehold location, the user's credentials may be used to identify the user or the user's home 102.

In step 535, the computing device may associate demographic data to each household identifier. Demographic data may be useful for determining which demographic categories have been exposed to each advertisement and the platform type of the exposure. Numerous examples of demographic factors exist. A few examples include: car ownership, age range, marital status, household income, number of children, gender, geographical region, and the like. Within each demographic factor may be one or more demographic categories. For car ownership, categories may include yes (own at least one car), no (do not own any cars), three or more cars, etc. For geographical region, categories may include the Northwestern United States, the Southwestern United States, the Midwestern United States, etc. Demographic data for each household may be periodically collected and stored in a server (e.g., a server at local office 103 and/or a central office). Each advertisement or type of advertisement may be associated with one or more demographic categories. For example, home 102a may be associated with: car owner, age 20-25, single, and Southeastern United States.

In step 540, the computing device may remove information that specifically identifies users and/or households, including customer names, addresses, household identifiers, and the like. The information may be removed to protect the privacy of users (e.g., customers). Nevertheless, in some aspects, a unique identifier corresponding to a specific user or household may be created such that the number of advertisement exposures to that specific user or household may be tracked and reported. For example, an advertiser may be able to learn that on average each unique user was exposed to a particular advertisement for a car, for example, across three different platforms (cable television, Internet, and cell phone).

In step 545, the computing device may generate one or more reports summarizing the exposure level of one or more advertisements. In some aspects, the report may include information for all advertisements. Alternatively, the report may include information for advertisements from specific advertisement providers (e.g., a report generated for the XYZ advertisement company). Because the report may be based on actual user exposure to advertisement content (e.g., when the user accesses the advertisement), the report may accurately describe the percentage access of each advertisement (e.g., the number of times each advertisement is provided to user homes vs. the number of times each advertisement is accessed by users). The report may also indicate the demographic categories reached by each advertisement and the types of platforms accessing the content.

Figure 8 illustrates an example report 800 summarizing access to content items. The report 800 may list one or more content items (e.g., Content item 1 (805) and Content item 2 (835)), which may comprise advertisement. The report may also identify (810) the number of times a content item is provided to users. The example report 800 indicates that content item 1 was provided to users 100 times. The report 800 may also indicate the number of times the content item was accessed (e.g., 40 times). The report 800 may also list the percentage (or fraction) access rate 820 (e.g., 40%), which may be computed by dividing the number of times of access (e.g., 40) by the number of times the content item is provided (e.g., 100). The report may also list the number of times the content item was accessed across each platform. For example, report 800 may indicate that the content item was accessed by Platform Type 1 devices 15 times and by Platform Type 2 devices 7 times. The report may list the number of times the content item was accessed by demographic category. For example, report 800 may indicate that the content item was accessed 18 times by devices in the Demographic Category 1 and 12 times by devices in the Demographic category 2.

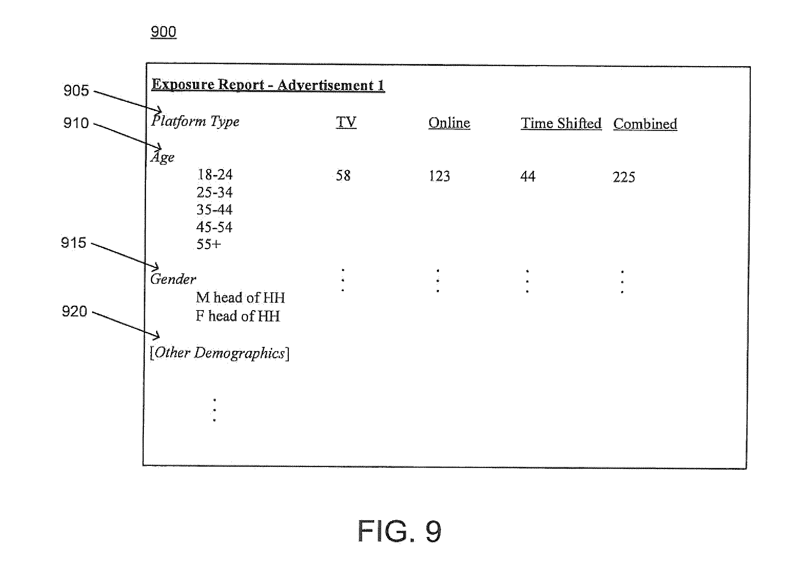

Figure 9 illustrates another example report 900 summarizing access to content items. The report 900 may list one or more content items, such as Advertisement 1. The report may include several headings identifying the platform types 905 of Advertisement 1 that were accessed by users based on demographics. Demographic categories included in the report comprise, for example, age (910), gender (915), and other demographics (920). Example report 900 indicates that Advertisement 1 was accessed 58 times by television viewers ages 18-24, 123 times by online viewers of the same age range, and 44 times by time shifted (e.g., on demand, DVR) viewers of the same age range. Accordingly, the total viewership of Advertisement 1 across these three platforms may be 225.

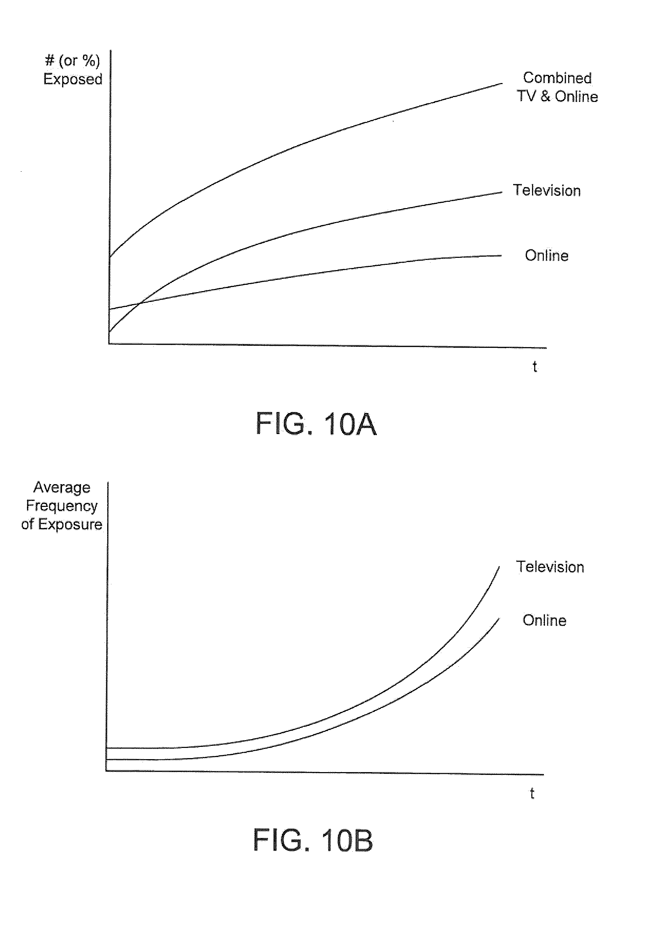

Figures 10A-B illustrate additional example reports or graphical representations of content access that may be included in the reports 800 or 900. In Figure 10A, the y-axis may represent the number (or percentage) of users exposed to a particular advertisement, and the x-axis may represent time. Three exemplary representations are included in Fig. 10A: the number of users exposed to the advertisement online, the number of users exposed to the advertisement on their televisions (or associated set-top boxes), and the combined number of users exposed to the advertisement across both platforms (e.g., the summation of television exposure and online exposure) over a period of time. In Figure 10B, the y-axis may represent the average frequency of exposure for a particular advertisement, and the x-axis may represent time. Two exemplary representations are included in Fig. 10B: the average frequency of exposure for an online version of the advertisement and the average frequency of exposure for a television version of the advertisement.

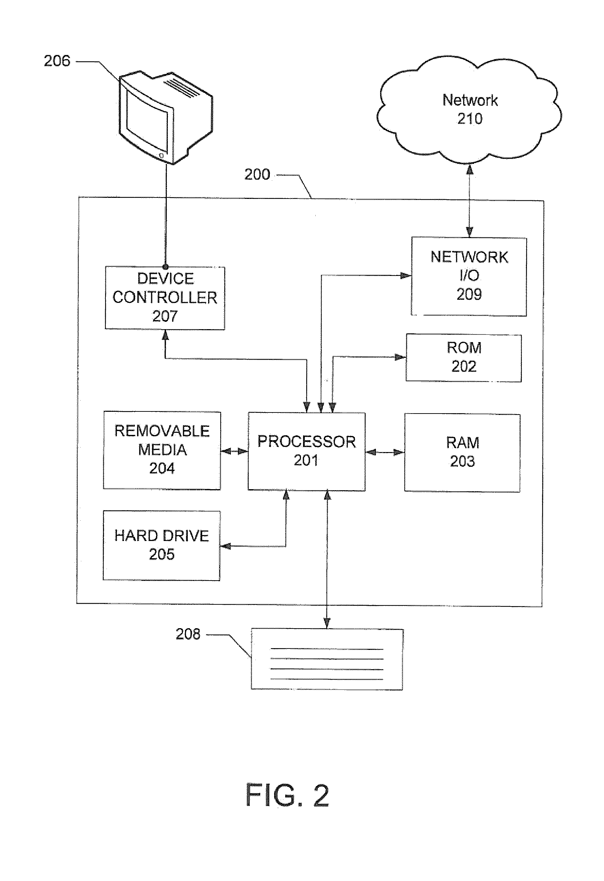

Figure 2 illustrates general hardware elements that can be used to implement any of the various computing devices and/or user devices discussed herein. The computing device 200 may include one or more processors 201, which may execute instructions of a computer program to perform any of the functions or steps described herein. The instructions may be stored in any type of computer-readable medium or memory, to configure the operation of the processor 201. For example, instructions may be stored in a read-only memory (ROM) 202, random access memory (RAM) 203, hard drive, removable media 204, such as a Universal Serial Bus (USB) drive, compact disk (CD) or digital versatile disk (DVD), floppy disk drive, or any other electronic storage medium. Instructions may also be stored in an attached (or internal) hard drive 205. The computing device 200 may include one or more output devices, such as a display 206 (or an external television), and may include one or more output device controllers 207, such as a video processor. There may also be one or more user input devices 208, such as a remote control, keyboard, mouse, touch screen, microphone, etc. The computing device 200 may also include one or more network interfaces, such as input/output circuits 209 (such as a network card) to communicate with an external network 210. The network interface may be a wired interface, wireless interface, or a combination of the two. In some embodiments, the interface 209 may include a modem (e.g., a cable modem), and network 210 may include the communication links 101 discussed above, the external network 109, an in-home network, a provider's wireless, coaxial, fiber, or hybrid fiber/coaxial distribution system (e.g., a DOCSIS network), or any other network.

The various features described above are merely non-limiting examples, and can be rearranged, combined, subdivided, omitted, and/or altered in any desired manner. For example, features of the computing device described herein (which may be server 106, 118, and/or 122) can be subdivided among multiple processors and computing devices. The true scope of this patent should only be defined by the claims that follow.

## Claims

1. A method comprising:
generating, by a computing device, a first content access tag for a first content item, wherein the first content access tag is configured to be read by devices of a first type;
generating a second content access tag for a second content item, wherein the second content access tag is configured to be read by devices of a second type different from the first type;
receiving a message from a first device of the first type, wherein the message includes an identifier that identifies the first device and indicates that the first device accessed the first content item;
receiving a second message from a second device of the second type, wherein the second message includes an identifier that identifies the second device and indicates that the second device accessed the second content item; and
generating, based at least in part on the received messages, a report indicating that the first content item and the second content item were accessed.

2. The method of claim 1, further comprising:
determining, based on the identifier of the first device and the identifier of the second device, that the first device and the second device are associated with the same household,
wherein the report indicates that at least one demographic category was exposed to both the first content item and the second content item.

3. The method of claim 1 or 2, further comprising:
determining, based on the identifier of the first device, that the first device is associated with a first household; and
determining, based on the identifier of the second device, that the second device is associated with a second household different from the first household, wherein the second household is in a different demographic category from the first household,
wherein the report indicates that a first demographic category was exposed to the first content item and that a second demographic category was exposed to the second content item, the first demographic category being different from the second demographic category.

4. The method according to any of the preceding claims, wherein:
the first content item comprises a video advertisement and the first content access tag comprises an enhanced television code,
the enhanced television code comprises an enhanced television binary interchange format (EBIF),
the second content item comprises the video advertisement and the second content access tag comprises an Internet code, and
the Internet code comprises a Hypertext Transfer Protocol (HTTP) cookie.

5. The method according to any of the preceding claims:
the first device comprises a terminal and the identifier of the first device comprises a MAC identifier, and
the second device is configured to run a web browser application and the identifier of the second device comprises an IP address.

6. The method according to any of the preceding claims, further comprising:
determining a first demographic category for the first device and a second demographic category for the second device,
wherein the report indicates that the first content item was accessed by a user in the first demographic category and that the second content item was accessed by a user in the second demographic category.

7. An apparatus comprising:
a processor; and
memory storing computer-readable instructions that, when read by the processor, cause the apparatus to:
receive an advertisement;
generate a first tagged advertisement by adding a first content access tag to the advertisement, wherein the first content access tag is formatted according to a first platform type;
generate a second tagged advertisement by adding a second content access tag to the advertisement, wherein the second content access tag is formatted according to a second platform type different from the first platform type;
receive, from a first device configured to detect content access tags formatted according to the first platform type, an indication that the first device accessed the advertisement, wherein the indication is sent by the first device based on detection by the first device of the first content access tag; and
receive, from a second device configured to detect content access tags formatted according to the second platform type, a second indication that the second device accessed the advertisement, wherein the second indication is sent by the second device based on detection by the second device of the second content access tag.

8. The apparatus of claim 7, wherein the first platform type comprises an enhanced television code, wherein the enhanced television code comprises an enhanced television binary interchange format (EBIF), and wherein the first tagged advertisement comprises a video advertisement.

9. The apparatus of claim 7 or 8, wherein the second platform type comprises a hypertext transfer protocol (HTTP) code, wherein the HTTP code comprises an HTTP cookie, and wherein the second tagged advertisement comprises at least one of an online video advertisement and a web banner advertisement.

10. The apparatus according to any of the claims 7-9, wherein the memory stores additional computer-readable instructions that, when read by the processor, cause the apparatus to:
based on the indication received from the first device, determine a first demographic category associated with the first device;
based on the indication received from the second device, determine a second demographic category associated with the second device, wherein the second demographic category is different from the first demographic category; and
generate a report indicating that the advertisement was accessed by both a household in the first demographic category and a household in the second demographic category.

11. The apparatus according to any of the claims 7-10, wherein the memory stores additional computer-readable instructions that, when read by the processor, cause the apparatus to:
based on the indication received from the first device and the indication received from the second device, determine a demographic category associated with the first device and the second device; and
generate a report indicating that the advertisement was accessed at least twice by households in the demographic category.

12. The apparatus according to any of the claims 7-11, wherein the memory stores additional computer-readable instructions that, when read by the processor, cause the apparatus to:
receive a request for video content from one of the first device and the second device;
transmit a first segment of the requested video content to the requesting device;
after transmitting the first segment, transmit one of the first tagged advertisement and the second tagged advertisement to the requesting device; and
after transmitting one of the first and second tagged advertisements, transmit a second segment of the requested video content to the requesting device.

13. The apparatus according to any of the claims 7-12, wherein:
the received indication includes a MAC identifier of the first device, an identifier of the advertisement, and a timestamp identifying the time that the first device accessed the advertisement, and
the second received indication includes an IP address of the second device, an identifier of the advertisement, and a timestamp identifying the time that the second device accessed the advertisement.

14. A computer-readable medium, storing computer-readable instructions that, when read by a computing device, cause the computing device to:
transmit a plurality of tagged advertisements to a plurality of devices, wherein at least a first tagged advertisement of the plurality of tagged advertisements is formatted for devices of a first platform type, and wherein at least a second tagged advertisement of the plurality of tagged advertisements is formatted for devices of a second platform type different from the first platform type;
receive, from a first device of the first platform type, a message indicating that the first device accessed the first tagged advertisement;
receive, from a second device of the second platform type, a message indicating that the second device accessed the second tagged advertisement;
determine, by a computing device, household identifiers for each of the first and second devices; and
determine demographic groups accessing one or more of the plurality of tagged advertisements based on the determined household identifiers.

15. The computer-readable medium of claim 14, wherein the demographic groups are categorized according to at least one of car ownership, age, marital status, household income, number of children, gender, and geographical region, the computer-readable medium, storing additional computer-readable instructions that, when read by the computing device, cause the computing device to:
generate a report indicating the demographic groups determined to have accessed one or more of the plurality of tagged advertisements.
